# DEMANDE DE BREVET EUROPEEN

(11) **EP 2 520 346 A1**
(43) Date de publication de la demande: **07.11.2012**
(21) Numéro de dépôt: 12305488.4
(22) Date de dépôt: 02.05.2012
(51) Int. Cl.: B01D 19/00, A23L 2/76, A23L 3/015, B01F 3/04

(54) **Procédé de dégazage et de carbonatation d'un composé fluide**

(30) Priorité: 06.05.2011 FR 1153886
(71) Demandeur: SDEL Alsace, 67550 Vendenheim (FR)
(72) Inventeur: Chmura, Delphine, 67720 Hoerdt (FR); Jung, Vincent, 67170 Brumath (FR)
(74) Mandataire: Rhein, Alain

(57) **Abrégé**

L'invention concerne un procédé d'extraction de gaz dissout dans un composé fluide, notamment alimentaire ou cosmétique, ledit composé fluide comprenant au moins un constituant.

Le procédé d'extraction de gaz dissout selon l'invention comporte les étapes suivantes :
- on injecte dans ledit composé fluide, après mélange éventuel de plusieurs constituants (1,2), un gaz inerte d'entrainement (4) à une pression au moins supérieure à la pression d'équilibre dudit gaz inerte (4) dans ledit composé fluide
- on injecte ledit composé fluide contenant le gaz inerte d'entrainement (4) dans une cuve tampon intermédiaire (6),
- on applique un différentiel de pression entre le point d'injection (22) du gaz inerte d'entrainement (4) et le point d'entrée (23) du mélange composé fluide/gaz inerte dans ladite cuve tampon (6),
- on assure la régulation du ciel gazeux (20) de ladite cuve tampon (6), par injection de gaz inerte sous pression (7) ou par éjection de gaz, pour obtenir une surpression relative au niveau d'une interface liquide/gaz (21), ladite surpression relative étant inférieure à la pression d'équilibre du gaz inerte d'entrainement (4) dans le composé fluide,
- on assure l'évacuation du gaz entrainé par ledit gaz d'entrainement (4),
- on achemine ledit composé en direction d'une unité de traitement avale, telle qu'une unité de gazéification (11) et/ou une unité de soutirage (10).

## Description

La présente invention concerne un procédé permettant l'extraction de gaz dissout dans un composé fluide.

La présente invention concerne plus particulièrement un procédé d'extraction de gaz dissout dans un composé fluide comprenant au moins un constituant, notamment un fluide alimentaire ou un fluide cosmétique. Le procédé selon l'invention peut aussi permettre éventuellement la carbonatation dudit composé fluide, notamment alimentaire.

En particulier, le procédé d'extraction de gaz selon l'invention permet d'éliminer le dioxygène O₂ et/ou le dioxyde de carbone CO₂ dissout dans ledit composé fluide. Particulièrement, lorsque le procédé d'extraction de gaz concerne l'élimination de dioxygène dissout dans un composé fluide, ledit procédé permet de minimiser l'altération par des phénomènes d'oxydation de ce composé lors de sa conservation.

Traditionnellement, dans les industries de fabrication de boissons, l'extraction de gaz, et notamment de dioxygène dissout, est effectuée uniquement sur l'eau, préalablement à une étape au cours de laquelle l'eau va être mélangée à un autre constituant, qui peut par exemple être un sirop.

En particulier, l'extraction du dioxygène, encore appelée désaération ou désoxygénation, peut être effectuée par pulvérisation de l'eau au travers d'une rampe de pulvérisation adaptée, dans une cuve dont l'enceinte est mise et maintenue en dépression, notamment par l'intermédiaire d'une pompe à vide. La pression de la phase gazeuse dans l'enceinte de la cuve est alors réduite jusqu'à la tension de vapeur d'eau. L'action de la dépression va permettre l'entraînement d'une large fraction du dioxygène dissout dans l'eau.

Une étape additionnelle, consistant en un stripage au dioxyde de carbone ou au diazote, peut être effectuée par ajout du gaz inerte sous pression dans l'eau à désoxygéner au moyen d'injecteurs. Le stripage favorise un entrainement du dioxygène dissout restant par le gaz inerte injecté. Cette technique permet d'obtenir une eau ayant un très faible taux de dioxygène dissout.

Il est également connu, notamment du document de brevet DE 31 43 459, une méthode pour extraire le dioxygène dans laquelle on dissout, dans un liquide, une quantité donnée d'un gaz différent du dioxygène, avant de procéder à une étape de dégazage sous vide.

Cependant, l'inconvénient majeur de ces méthodes est que la désoxygénation sous vide ne s'applique traditionnellement qu'à l'eau. Cela s'explique par le fait que la désoxygénation sous vide entraine, en plus du dioxygène dissout, une fuite des composés organoleptiques.

De ce fait, dans les industries alimentaires, notamment dans les industries de boissons comportant généralement de l'eau ainsi qu'un autre constituant fluide plus ou moins visqueux, par exemple un sirop ou un concentré de jus, la désoxygénation de l'eau se fait préalablement à son mélange avec un ou plusieurs autres constituants.

On connait par exemple, du document de brevet US 4 599 239, une technique dans laquelle une solution de sucre est préparée avec de l'eau désaérée avant d'être mélangée avec des substances aromatiques qui n'ont pas été préalablement désoxygénées.

L'eau, qui est faiblement chargée en dioxygène dissout après désoxygénation, est donc mélangée avec au moins un autre constituant non désoxygéné, présentant encore un certain taux de dioxygène dissout. Cela a pour conséquence que, une fois la boisson mise sous conditionnement et stockée, celle-ci peut présenter des phénomènes d'oxydation qui sont à l'origine de l'altération des qualités organoleptiques du produit. De ce fait, la durée de conservation du produit est limitée.

Une autre technique connue de l'état de la technique pour éliminer le dioxygène dissout consiste à désoxygéner les liquides par ébullition. Le dégazage à chaud permet une diminution satisfaisante de la quantité de gaz dissout dans un liquide mais présente l'inconvénient de nécessiter une étape supplémentaire de condensation pour éviter un entrainement des composés organoleptiques.

La diminution du taux de dioxygène dissout peut aussi être obtenue par ajout de composés chimiques dans le produit final. On peut utiliser par exemple de l'acide ascorbique mais un tel produit a pour inconvénient principal d'entrainer une acidification du produit. De plus, le résultat obtenu en termes de réduction de taux de dioxygène dissout dans le produit est moins satisfaisant que lorsqu'on utilise les procédés classiques de désaération.

Une fois l'oxygène dissout éliminé de l'eau et le mélange avec le(s) autre(s) constituant(s) effectué, il est possible d'introduire du gaz audit mélange ce qui permet d'obtenir une boisson « à bulles » ou gazeuse. En particulier, il est connu de carbonater une boisson, c'est-à-dire d'y introduire du dioxyde de carbone CO₂, encore appelé gaz carbonique. L'introduction d'un gaz dans le liquide se fait par l'intermédiaire d'un carbonateur ou d'un saturateur.

Le mélange carbonaté doit ensuite être stocké dans une cuve sous pression pour éviter une fuite de dioxyde de carbone. Pour ce faire, le mélange carbonaté arrive généralement dans une cuve de capacité importante (environ 3000 litres) qui doit être maintenue à une pression élevée de 6 à 8 bars. Une telle pression maintenue au sein de la cuve, va permettre d'éviter le dégazage, c'est-à-dire une fuite du dioxyde de carbone, hors du mélange carbonaté. Le soutirage du liquide peut ensuite se faire directement par la partie inférieure de la cuve.

L'invention offre la possibilité de pallier les divers inconvénients de l'état de la technique en proposant un procédé d'extraction d'un gaz dissout dans un composé fluide, ledit composé comprenant au moins dans sa composition un constituant.

Le procédé selon l'invention peut être appliqué à l'eau uniquement, qu'elle soit carbonatée ou non. Le présent procédé peut également être effectué directement sur le mélange entre l'eau avec un ou plusieurs autres constituants. Enfin le procédé peut encore permettre l'extraction de gaz d'un composé fluide plus ou moins visqueux uniquement, et qui n'est pas destiné à être mélangé à de l'eau par la suite. Un tel produit peut par exemple, mais non limitativement, être un pur jus.

De plus, le procédé selon l'invention peut, avantageusement mais pas nécessairement, comporter une étape dans laquelle le composé fluide est carbonaté grâce à une unité de gazéification, en particulier une boucle de carbonatation, qui permet d'éviter la mise en place de cuves encombrantes.

A cet effet, la présente invention concerne un procédé d'extraction de gaz dissout dans un composé fluide, notamment alimentaire ou cosmétique, ledit composé fluide comprenant au moins un constituant, **caractérisé en ce que** :
- on injecte dans ledit composé fluide, après mélange éventuel de plusieurs constituants, un gaz inerte d'entraînement à une pression au moins supérieure à la pression d'équilibre dudit gaz inerte dans ledit composé fluide,
- on injecte ledit composé fluide contenant le gaz inerte d'entraînement dans une cuve tampon intermédiaire,
- on applique un différentiel de pression entre le point d'injection du gaz inerte d'entrainement et le point d'entrée du mélange composé fluide/gaz inerte dans ladite cuve tampon,
- on assure la régulation du ciel gazeux de ladite cuve tampon, par injection de gaz inerte sous pression ou par éjection de gaz, pour obtenir une surpression relative au niveau d'une interface liquide/gaz, ladite surpression relative étant inférieure à la pression d'équilibre du gaz inerte d'entrainement dans le composé fluide,
- on assure l'évacuation du gaz entrainé par ledit gaz d'entrainement,
- on achemine ledit composé en direction d'une unité de traitement avale, telle qu'une unité de gazéification et/ou une unité de soutirage.

Selon une forme préférentielle de l'invention, le procédé est mis en oeuvre sur un composé fluide, notamment alimentaire ou cosmétique, comprenant au moins de l'eau et un autre constituant.

Cependant, le composé fluide auquel s'applique le procédé selon l'invention peut également consister en de l'eau, qu'elle soit carbonatée ou non.

Le procédé d'extraction de gaz dissout peut encore s'appliquer à un composé fluide qui consiste en un constituant, différent de l'eau.

Cela concerne par exemple les « pur jus », c'est-à-dire qui comportent exclusivement des fruits pressés, les vins, les cidres, les produits laitiers, les bières etc., qui sont destinés à être conditionnés, après extraction du gaz dissout, sans adjonction d'un autre constituant, tel que de l'eau.

Selon une utilisation préférentielle, le procédé selon l'invention est destiné à extraire le dioxygène et/ou le dioxyde de carbone dissout dans un composé fluide.

Le présent procédé peut donc permettre en particulier l'extraction de dioxyde de carbone dissout dans un composé fluide, notamment lorsque celui-ci correspond à de l'eau carbonatée.

Selon un autre mode de réalisation du procédé selon l'invention, le gaz inerte d'entrainement est choisi parmi le diazote, le dioxyde de carbone, le dioxygène, l'air comprimé ou un mélange de plusieurs de ces gaz.

Selon encore une autre variante du procédé, le gaz inerte sous pression injecté dans la cuve tampon pour maintenir une surpression relative à l'interface liquide/gaz est choisi parmi le diazote, le dioxyde de carbone, l'air comprimé, le dioxygène ou un mélange de plusieurs de ces gaz.

Selon un exemple de mise en oeuvre du procédé particulièrement intéressant, le différentiel de pression, entre le point d'injection du gaz inerte d'entrainement et le point d'entrée du mélange composé fluide/gaz inerte dans la cuve tampon, est obtenu par application d'une pression, au niveau du point d'entrée dans la cuve tampon, qui est inférieure par rapport à la pression au point d'injection du gaz inerte d'entrainement dans le composé fluide.

Selon un autre exemple de réalisation, lorsque le procédé selon l'invention est destiné à extraire le dioxygène dissout dans un composé fluide, le gaz inerte d'entrainement consiste en du diazote et le gaz inerte sous pression pour le maintien d'une surpression relative dans la cuve tampon consiste également en du diazote.

Dans le procédé selon l'invention, le passage du composé fluide dans une cuve tampon présente de nombreux avantages et permet d'apporter des solutions aux inconvénients des procédés d'extraction de gaz dissouts déjà existants.

L'avantage majeur du procédé selon l'invention est qu'il permet notamment d'extraire un gaz dissout dans tout type de fluide, tout en évitant la perte des composés organoleptiques. De plus, l'extraction du gaz dissout peut se faire sur un composé fluide avec un constituant unique, différent de l'eau ou sur un mélange comportant au moins de l'eau et un autre constituant. A l'inverse, les procédés existants se contentent uniquement de désoxygéner l'eau et de la mélanger ensuite avec un ou plusieurs autres constituants présentant encore du dioxygène dissout, ce qui aboutit inévitablement à des phénomènes d'oxydation lors de la conservation du produit.

Le procédé selon l'invention permet au contraire d'obtenir un produit final ayant un moindre taux de dioxygène dissout. De ce fait, une grande majorité des produits finaux obtenus par le présent procédé présentera une dégradation par oxydation atténuée par rapport à un autre produit dont au moins un des constituants comporte encore un certain taux de dioxygène dissout.

Un autre avantage du procédé selon l'invention réside dans le fait que l'unité de gazéification pouvant être raccordée à la cuve tampon est, en particulier mais pas nécessairement, une boucle dynamique de saturation et de mélange. Le raccordement d'une telle boucle permet d'obtenir un mélange homogène entre le composé fluide et un gaz, en particulier le dioxyde de carbone. De plus, ce système permet d'éviter les cuves de très grande capacité, généralement utilisées dans les procédés de carbonatation afin de maintenir les molécules de dioxyde de carbone dans le liquide.

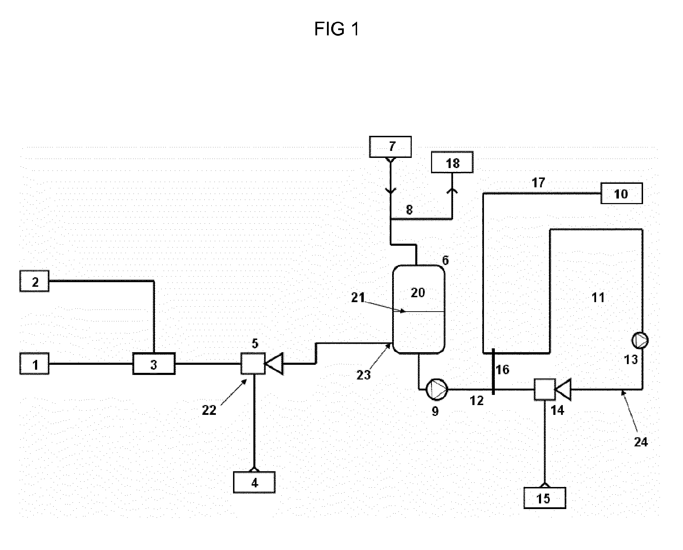

D'autres caractéristiques et avantages du procédé selon l'invention ressortiront de la description détaillée qui va suivre des modes de réalisation non limitatifs de l'invention, en référence à la figure 1 annexée, qui représente une vue schématique d'une installation permettant la mise en oeuvre du procédé d'extraction de gaz dissout dans un composé fluide selon l'invention.

Les composés fluides auxquels s'applique le procédé d'extraction de gaz dissout selon l'invention sont, en particulier mais non limitativement, des composés fabriqués par les industries alimentaires et cosmétiques, pouvant présenter des viscosités variables.

L'étape d'extraction du gaz dissout du procédé selon l'invention s'applique aux composés fluides comprenant au moins un constituant. Ainsi, le présent procédé peut s'appliquer à l'eau uniquement, que celle-ci soit carbonatée ou non. De façon particulièrement avantageuse, l'extraction du gaz dissout peut être effectuée directement sur le mélange des différents constituants contrairement aux techniques déjà existantes qui consistent à désoxygéner l'eau uniquement. Enfin, le procédé peut également être appliqué à un composé fluide présentant un constituant unique différent de l'eau. Un tel cas concerne par exemple les « purs jus » qui, comme leur nom l'indique, contiennent exclusivement des fruits pressés, sans sucres ajoutés, et qui peuvent être conditionnés directement sans adjonction d'eau. Cela concerne également, par exemple, les vins, les cidres, les produits laitiers, les bières etc.

Dans le cadre de l'industrie agroalimentaire, les liquides alimentaires, à l'exception notamment des eaux plates ou gazeuses, des vins, des cidres, des produits laitiers, des purs jus etc., sont préférentiellement préparés par mélange d'eau avec au moins un autre composé, génériquement appelé sirop, étant entendu que le sirop peut être également un jus concentré ou un produit analogue.

Les produits cosmétiques, quant à eux, renferment aussi généralement de l'eau et un mélange d'autres constituants, par exemple des composés chimiques ou des extraits naturels, tels que des hydratants, des antioxydants, des parfums etc.

Les liquides alimentaires, tout comme les produits cosmétiques, sont susceptibles de se détériorer à cause de phénomènes d'oxydation. Le procédé selon l'invention est donc tout particulièrement indiqué pour ces deux types de produits, alimentaires et cosmétiques.

En particulier, le procédé selon l'invention peut permettre l'extraction de gaz dissout contenu dans des liquides alimentaires tels que de l'eau, des soupes, des sauces, des produits laitiers, des boissons avec ou sans pulpes, carbonatées ou non, tels que des eaux gazeuses aromatisées ou non, des sodas à base d'eau et de sirop gazeux ou non, des jus de fruits par exemple des boissons aux fruits, des nectars à base de concentré ou des purs jus, des limonades, des vins, des bières, des cidres etc. Le procédé selon l'invention peut également être utilisé pour l'extraction de gaz à partir de produits cosmétiques tels que des gels, des laits, des lotions, des shampoings et des produits analogues.

Le procédé selon l'invention permet selon un mode de réalisation particulièrement avantageux d'extraire le dioxygène dissout dans un composé fluide. Cependant, on peut également imaginer que ce procédé permette l'extraction d'un autre type de gaz dissout, en particulier le dioxyde de carbone. Par exemple, certaines sources d'eau fournissent une eau carbonatée de façon naturelle. Cependant, ces eaux présentent une carbonatation peu importante. I1 peut donc être intéressant d'extraire le dioxyde de carbone naturellement dissout dans cette eau, par application du procédé selon l'invention, puis de la recarbonater par la suite. La mise en oeuvre du procédé selon l'invention, dans ce cas précis, permet également l'obtention d'une eau présentant un taux d'oxygène dissout réduit. Ainsi, le présent procédé peut entrainer l'extraction à la fois de l'oxygène et du dioxyde de carbone dissouts dans le composé fluide, ici l'eau.

Comme illustré sur la figure 1, le mélange entre l'eau 1 et un autre constituant éventuel 2 du composé fluide peut être réalisé par une unité de mélange 3 appropriée à cet effet et connue de l'homme du métier.

Un tel mode de réalisation, tel qu'illustré à la figure 1, n'est pas limitatif de l'invention. En effet, on peut aisément imaginer la mise en oeuvre du procédé selon l'invention sur un composé fluide comportant un seul constituant ou un nombre supérieur à deux constituants.

Une fois le mélange éventuel entre les constituants 1 et 2 du composé fluide effectué, la première étape du procédé selon l'invention consiste en l'injection d'un gaz inerte d'entraînement 4 dans ledit composé. Le dit gaz inerte d'entraînement 4 est injecté dans le composé fluide à une pression au moins supérieure à la pression d'équilibre de ce gaz inerte d'entrainement 4 dans le liquide.

Cette pression d'équilibre du gaz dans le liquide découle de la loi de Henry qui dispose que « à température constante et à saturation, la quantité de gaz dissout dans un liquide est proportionnelle à la pression partielle qu'exerce ce gaz sur le liquide ».

Cela signifie que, lorsqu'un gaz est dissout dans un liquide, la quantité de gaz dissoute dépend de la pression et de la température. En ce qui concerne plus particulièrement la pression d'équilibre du gaz dans le liquide, cette dernière correspond à la pression à laquelle le gaz reste dans le liquide sans s'en échapper. Si la pression à laquelle est soumis le liquide varie, la quantité de gaz dissout va s'en trouver modifiée. En particulier, si la pression appliquée diminue, le gaz va s'échapper du liquide, il va alors y avoir un dégazement. Au contraire, si la pression appliquée est augmentée, le gaz va être dissout encore plus et la quantité de gaz dans le liquide va pouvoir être augmentée.

L'injection du gaz inerte d'entraînement 4 dans le composé fluide doit donc être effectuée à une pression au moins supérieure à la pression d'équilibre du gaz dans le composé fluide pour permettre partiellement sa dissolution.

Cette injection peut en particulier être effectuée par l'intermédiaire d'un saturateur 5 situé en aval du mélangeur 3. Ledit gaz inerte d'entrainement 4 peut être, en particulier mais non limitativement, du dioxyde de carbone, du diazote, du dioxygène, de l'air comprimé ou un mélange de plusieurs de ces gaz.

L'injection de ce gaz inerte 4 va permettre l'entrainement d'un, ou plusieurs, gaz dissout (s) dans le composé fluide. Le gaz entraîné peut notamment être du dioxygène et/ou du dioxyde de carbone.

Le choix du gaz inerte d'entrainement 4 dépend du gaz dissout que l'on veut extraire. En effet, lorsque le gaz dissout à extraire est du dioxygène ou du dioxyde de carbone, le gaz inerte d'entrainement 4 qui est injecté dans le composé fluide correspond préférentiellement à du diazote N₂. En effet, les expériences montrent que, dans ce cas, l'utilisation du diazote en tant que gaz inerte d'entrainement 4 permet d'obtenir des résultats particulièrement intéressants en termes de taux d'oxygène dissout dans le produit final.

Cependant, lorsque l'on veut obtenir un composé fluide présentant un taux de dioxygène réduit avant de le carbonater, il peut également s'avérer intéressant d'utiliser du dioxyde de carbone CO₂ en tant que gaz inerte d'entrainement 4.

Une fois que le gaz inerte d'entrainement 4 est injecté et partiellement dissout dans le composé fluide, le mélange composé fluide/gaz d'entrainement passe au niveau d'une cuve tampon intermédiaire 6 de capacité moyenne, la dite cuve 6 étant située en aval du saturateur 5.

La cuve tampon 6 présente préférentiellement un volume inférieur à 1500 litres. En effet, plus le volume de la cuve tampon 6 est faible, plus la vidange et l'entretien de celle-ci sont aisés.

Selon un mode de réalisation du procédé selon l'invention, le composé fluide est soumis à une variation de pression entre le moment où le gaz inerte d'entrainement 4 lui est injecté et le moment où le mélange composé fluide/gaz inerte arrive au niveau de la cuve tampon 6. Préférentiellement, la pression à laquelle est soumis le composé fluide est plus faible au point d'entrée 23 dans la cuve tampon 6 par rapport à la pression existant au point d'injection 22 du gaz d'entrainement 4 dans le composé fluide. Une telle variation de pression peut être obtenue par tous moyens connus de l'homme du métier.

Ce différentiel de pression appliqué au composé fluide, combiné à une quantité optimale de gaz d'entrainement 4 et à la qualité de la dissolution de ce dernier, permet d'obtenir des produits finaux présentant des taux d'oxygène et/ou de dioxyde de carbone dissout(s) avantageusement bas.

Dans le procédé selon l'invention, on assure une régulation du ciel gazeux 20 de la cuve tampon 6 par injection de gaz inerte sous pression 7 ou par éjection de gaz. En particulier on maintient une surpression relative au niveau d'une interface liquide/gaz 21 : cela signifie qu'une pression légèrement supérieure à la pression atmosphérique est entretenue dans l'enceinte de la cuve 6 et que celle-ci est inférieure à la pression d'équilibre à laquelle est maintenu le liquide qui arrive dans ladite cuve 6.

De ce fait, lorsque le composé fluide dans lequel est partiellement dissout le gaz d'entraînement 4 arrive dans la cuve tampon 6, la pression inférieure à la pression d'équilibre qui y est maintenue va faciliter la fuite du gaz d'entrainement 4. Le dégazement de ce dernier va entraîner également l'extraction de gaz dissout dans le composé fluide, en particulier notamment l'extraction de dioxygène et/ou du dioxyde de carbone dissout.

Selon un mode de réalisation préféré de l'invention, la surpression relative est entretenue à l'interface liquide/gaz 21 dans la cuve tampon 6 par injection d'un gaz inerte sous pression 7 par la partie supérieure de ladite cuve. Avantageusement, le gaz inerte 7 permettant la surpression relative est choisi parmi le dioxyde de carbone, le diazote, le dioxygène, l'air comprimé ou un mélange de plusieurs de ces gaz.

En particulier, lorsqu'on veut extraire du dioxygène ou du dioxyde de carbone dissout, le gaz inerte 7 permettant le maintient de la cuve tampon 6 en surpression relative peut correspondre au diazote. En effet, les expériences montrent que l'utilisation du diazote pour le maintien d'un ciel gazeux 20 dans la cuve 6 permet d'obtenir des résultats intéressants lors de l'extraction du dioxygène, et tout particulièrement lorsque le gaz inerte d'entrainement 4 injecté dans le composé fluide correspond également au diazote.

Selon une autre particularité, lorsque le gaz dissout à extraire est le dioxygène et que le composé est destiné à être carbonaté par la suite, le gaz inerte 7 injecté peut correspondre au dioxyde de carbone CO₂, notamment lorsque le CO₂ était déjà utilisé en tant que gaz d'entrainement 4.

L'utilisation d'une cuve tampon 6 permet donc en particulier l'évacuation du dioxygène et/ou du dioxyde de carbone dissout dans le composé fluide. En effet, le différentiel qui existe entre la pression d'équilibre du gaz dissout dans le composé fluide arrivant dans la cuve 6 et la surpression relative maintenue à l'intérieur de ladite cuve 6 facilite l'entrainement du gaz dissout par le gaz d'entrainement 4 ajouté lors de la deuxième étape du procédé selon l'invention.

Le gaz ainsi extrait du composé fluide peut alors être évacué par la partie supérieure de ladite cuve tampon 6. L'évacuation peut se faire par exemple à l'aide de moyens tels qu'une vanne d'évacuation en régulant la pression du ciel gazeux 20 de l'enceinte de la cuve tampon 6.

Grâce au procédé selon l'invention, on obtient un composé fluide dont une grande partie du gaz dissout a été extrait. En particulier, lorsque ledit gaz extrait correspond au dioxygène, le composé présentera très peu de phénomènes d'oxydation, lors de son stockage, entrainant une altération de ses qualités organoleptiques.

Selon un mode de réalisation préféré de l'invention, l'extraction du dioxygène dissout se fait à température ambiante. En effet, l'extraction du dioxygène dissout est plus efficace lorsque la cuve tampon 6 est maintenue à une température ambiante. De plus, cela permet d'éviter des fuites de composés organoleptiques.

De façon avantageuse, la cuve tampon 6 dans laquelle arrive le mélange composé fluide/gaz d'entrainement 4 présente des moyens permettant d'une part d'homogénéiser de façon encore meilleure les constituants composant ledit mélange et d'autre part de faciliter l'entrainement du gaz dissout par le gaz d'entrainement 4.

Préférentiellement, la cuve tampon 6 utilisée dans la deuxième étape du procédé selon l'invention présente des moyens 8 permettant l'évacuation du gaz dissout extrait du composé fluide. La cuve tampon 6 peut également présenter des moyens permettant de renvoyer le gaz inerte à une centrale de récupération des gaz 18.

Selon un mode de réalisation de l'invention, le composé fluide dont on a extrait le gaz dissout peut ensuite être soutiré par la partie inférieure de la cuve tampon 6 pour être conditionné. La cuve tampon 6 peut donc être directement reliée à une unité de soutirage 10 destinée par exemple à la mise en boites, en bouteilles ou en flacons du composé fluide traité par le procédé selon l'invention. Ce mode de réalisation du procédé s'applique lorsque le produit final est un liquide alimentaire non carbonaté, par exemple une soupe, une sauce, un produit laitier, une eau plate aromatisée ou non, un jus de fruit, un vin, un soda non gazeux, ou un produit cosmétique, par exemple un gel, un lait, une lotion ou un shampoing.

Selon un autre mode de réalisation de l'invention, la cuve tampon 6 est reliée à une unité de gazéification 11 dans laquelle le composé fluide est gazéifié, notamment carbonaté, avant d'être soutiré et conditionné au niveau de l'unité de soutirage 10.

Ce mode de réalisation est notamment utilisé lorsqu'on veut obtenir des boissons carbonatées, telles que des eaux gazeuses aromatisées ou non, des sodas gazeux ou des limonades, des bières, des cidres etc. Dans ce mode de réalisation, le composé fluide à gazéifier est dans un premier temps extrait par la partie inférieure de la cuve tampon 6. Ledit composé est ensuite acheminé, via une pompe d'alimentation 9, jusqu'à l'unité de gazéification 11. Ladite pompe 9 délivre le composé à ladite unité 11.

De façon avantageuse, l'unité de gazéification 11 consiste en une boucle dynamique de saturation et de mélange 24 dans laquelle le produit circule à un débit supérieur au débit maximal de l'unité de soutirage 10.

Ladite boucle comprend préférentiellement au moins :
- un branchement 12 reliant la cuve tampon 6 et la boucle dynamique 24
- une pompe de boucle 13 qui assure un débit minimal dans la boucle, ce débit étant sensiblement supérieur au débit auquel fonctionne l'unité de soutirage 10
- un saturateur 14 permettant d'injecter un gaz 15, notamment du dioxyde de carbone, dans ledit composé fluide circulant dans la boucle 24
- une vanne mélangeuse 16 assurant la recirculation dans la boucle 24 et la sortie vers l'unité de soutirage 10 via une ligne d'alimentation 17.

Cette boucle dynamique 24 de saturation et de mélange permet d'obtenir une bonne homogénéité du mélange ; en effet, la circulation des produits et du gaz se fait en continu dans ladite boucle 24, même en cas d'arrêts momentanés de l'unité de soutirage 10. Le temps de recirculation pendant l'arrêt de ladite unité de soutirage 10 est déterminé par la pression et la température du produit. De plus, la boucle dynamique 24 a pour autre avantage de permettre une stabilité très satisfaisante du gaz 15, notamment le dioxyde de carbone, dans le composé fluide.

Selon un mode de réalisation préféré de l'invention, la gazéification du composé fluide au sein de la boucle 24 se fait à température ambiante.

Les avantages résultants du procédé selon l'invention résident dans le fait que l'extraction du gaz dissout, en particulier l'extraction du dioxygène, ne se fait pas uniquement sur l'eau mais est effectuée directement sur le mélange entre les constituants d'un composé fluide.

Le procédé selon l'invention est applicable à une très large gamme de produits, qu'ils soient alimentaires ou cosmétiques. Ledit procédé permet l'obtention de produits finaux présentant un taux d'oxygène dissout si faible que les phénomènes d'oxydation, habituellement rencontrés lors de la conservation de tels produits, seront considérablement atténués.

## Revendications

1. Procédé d'extraction de gaz dissout dans un composé fluide, notamment alimentaire ou cosmétique, ledit composé fluide comprenant au moins un constituant, **caractérisé en ce que** :
- on injecte dans ledit composé fluide, après mélange éventuel de plusieurs constituants (1, 2), un gaz inerte d'entrainement (4) à une pression au moins supérieure à la pression d'équilibre dudit gaz inerte (4) dans ledit composé fluide,
- on injecte ledit composé fluide contenant le gaz inerte d'entrainement (4) dans une cuve tampon intermédiaire (6),
- on applique un différentiel de pression entre le point d'injection (22) du gaz inerte d'entrainement (4) et le point d'entrée (23) du mélange composé fluide/gaz inerte dans ladite cuve tampon (6),
- on assure la régulation du ciel gazeux (20) de ladite cuve tampon (6), par injection de gaz inerte sous pression (7) ou par éjection de gaz, pour obtenir une surpression relative au niveau d'une interface liquide/gaz (21), ladite surpression relative étant inférieure à la pression d'équilibre du gaz inerte d'entrainement (4) dans le composé fluide,
- on assure l'évacuation du gaz entrainé par ledit gaz d'entrainement (4),
- on achemine ledit composé en direction d'une unité de traitement avale, telle qu'une unité de gazéification (11) et/ou une unité de soutirage (10).

2. Procédé d'extraction de gaz dissout dans un composé fluide selon la revendication 1 **caractérisé en ce que** ledit composé fluide, comprend au moins de l'eau (1) et un autre constituant (2).

3. Procédé d'extraction de gaz dissout dans un composé fluide selon la revendication 1 **caractérisé en ce que** ledit composé fluide consiste en de l'eau, carbonatée ou non.

4. Procédé d'extraction de gaz dissout dans un composé fluide selon la revendication 1 **caractérisé en ce que** ledit composé fluide consiste en un constituant, différent de l'eau.

5. Procédé d'extraction de gaz dissout dans un composé fluide selon l'une quelconque des revendications 1 à 4 **caractérisé en ce que** ledit procédé est destiné à extraire le dioxygène et/ou le dioxyde de carbone dissout dans ledit composé fluide.

6. Procédé d'extraction de gaz dissout dans un composé fluide selon l'une quelconque des revendications 1 à 5 **caractérisé en ce que** le gaz inerte d'entrainement (4) est choisi parmi le diazote, le dioxyde de carbone, le dioxygène, l'air comprimé ou un mélange de plusieurs de ces gaz.

7. Procédé d'extraction de gaz dissout dans un composé fluide selon l'une quelconque des revendications 1 à 6 **caractérisé en ce que** le différentiel de pression, entre le point d'injection (22) du gaz inerte d'entrainement (4) et le point d'entrée (23) du mélange composé fluide/gaz inerte (4) dans la cuve tampon, est obtenu par application d'une pression, au niveau du point d'entrée (23), qui est inférieure par rapport à la pression au point d'injection (22) du gaz inerte d'entrainement (4) dans ledit composé fluide.

8. Procédé d'extraction de gaz dissout dans un composé fluide selon l'une quelconque des revendications 1 à 7 **caractérisé en ce que** la surpression relative est maintenue à l'interface liquide gaz (21), dans la cuve tampon (6) par injection d'un gaz inerte sous pression (7) choisi parmi le diazote, le dioxyde de carbone, l'air comprimé, le dioxygène ou un mélange de plusieurs de ces gaz.

9. Procédé d'extraction de gaz dissout dans un composé fluide selon l'une quelconque des revendications 1 à 8 **caractérisé en ce que**, pour extraire du dioxygène dissout dans ledit composé fluide, le gaz inerte d'entrainement (4) consiste en du diazote et le gaz inerte sous pression (7) pour le maintien d'une surpression relative dans la cuve tampon (6) consiste en du diazote.
